# FASCICULE DE BREVET EUROPEEN

(11) **EP 3 683 150 B1**
(45) Date de publication et mention de la délivrance du brevet: **03.03.2021**
(21) Numéro de dépôt: 20151139.1
(22) Date de dépôt: 10.01.2020
(51) Int. Cl.: B64D 29/06, F16C 11/04, F16B 21/12

(54) **DISPOSITIF DE LIAISON PIVOTANTE ENTRE AU MOINS DEUX PIÈCES, AÉRONEF COMPRENANT UN CAPOT ÉQUIPÉ DUDIT DISPOSITIF DE LIAISON PIVOTANTE**
VERBINDUNGSVORRICHTUNG, DIE ZWISCHEN MINDESTENS ZWEI TEILEN SCHWENKBAR IST, LUFTFAHRZEUG, DAS EINE ABDECKUNG UMFASST, DIE MIT DIESER SCHWENKBAREN VERBINDUNGSVORRICHTUNG AUSGESTATTET IST
DEVICE FOR PIVOTING CONNECTION BETWEEN AT LEAST TWO PARTS, AIRCRAFT COMPRISING A COWL EQUIPPED WITH SAID PIVOTING CONNECTION DEVICE

(30) Priorité: 21.01.2019 FR 1900503
(43) Date de publication de la demande: 22.07.2020
(73) Titulaire: AIRBUS OPERATIONS (S.A.S.), 31060 Toulouse (FR)
(72) Inventeur: MESSINA, Paolo, 31060 TOULOUSE Cedex 9 (FR)
(74) Mandataire: Gicquel, Olivier Yves Gérard

(56) Documents cités:
- EP-A1- 0 086 691
- ES-A1- 2 390 440
- FR-A1- 2 596 116
- FR-A1- 2 947 592
- JP-U- S5 332 269
- US-B2- 10 081 435

## Description

La présente demande se rapporte à un dispositif de liaison pivotante entre au moins deux pièces ainsi qu'à un aéronef comprenant un capot équipé dudit dispositif de liaison pivotante.

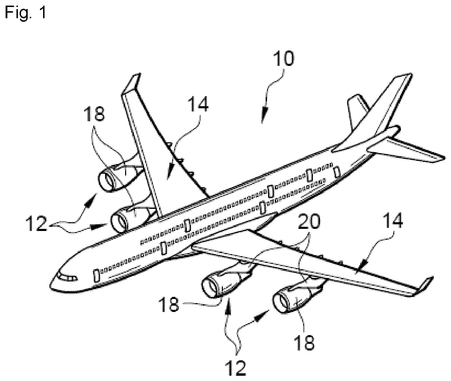

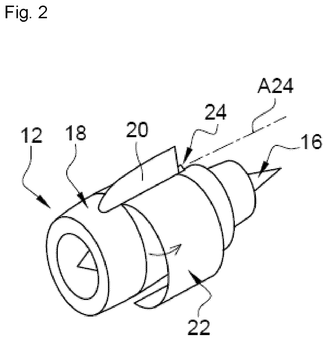

Selon une configuration visible sur les figures 1 et 2, un aéronef 10 comprend plusieurs ensembles moteurs 12 qui sont positionnés sous la voilure 14 de l'aéronef 10.

Un ensemble moteur 12 comprend un moteur 16, une nacelle 18 positionnée autour du moteur 16 et un mât 20 qui assure la liaison entre le moteur 16 et le reste de l'aéronef 10, notamment la voilure 14.

La nacelle 18 comprend au moins un capot 22 relié au reste de la nacelle 18 par une charnière 24 permettant au capot 22 de pivoter autour d'un axe de pivotement A24 entre une position ouverte (visible sur la figure 2) et une position fermée (visible sur la figure 1).

Selon une configuration, la charnière 24 présente plusieurs dispositifs de liaison pivotante 26 répartis le long de l'axe de pivotement A24.

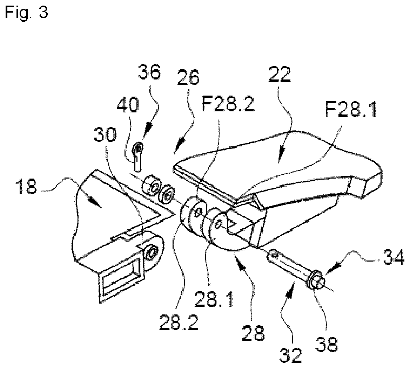

Selon un premier mode de réalisation visible sur la figure 3, un dispositif de liaison pivotante 26 comprend :
une chape 28, solidaire du capot 22 (ou respectivement du reste de la nacelle 18), présentant deux branches 28.1, 28.2,
un bras 30, solidaire du reste de la nacelle 18 (ou respectivement du capot 22), positionné entre les branches 28.1, 28.2 de la chape 28,
un axe cylindrique 32 positionné dans des alésages coaxiaux prévus dans les deux branches 28.1, 28.2 de la chape 28 et le bras 30, ledit axe cylindrique 32 assurant la liaison entre la chape 28 et le bras 30 et présentant un axe de révolution confondu avec l'axe de pivotement A24.

Des bagues de guidage peuvent être intercalées entre l'axe cylindrique 32 et les branches 28.1, 28.2 de la chape 28 ainsi qu'entre l'axe cylindrique 32 et le bras 30.

Le dispositif de liaison pivotante 26 comprend également des première et deuxième butées 34, 36, positionnées de part et d'autre des branches 28.1, 28.2 de la chape 28, pour immobiliser en translation l'axe cylindrique 32 par rapport aux branches 28.1, 28.2 selon une direction parallèle à l'axe de pivotement A24.

Selon ce premier mode de réalisation, l'axe cylindrique 32 présente à une première extrémité une tête 38 qui forme la première butée 34 et qui est configurée pour prendre appui contre la face extérieure F28.1 de la première branche 28.1 de la chape 28.

La deuxième butée 36 se présente sous la forme d'une goupille fendue 40 qui traverse l'axe cylindrique 32 et qui est configurée pour prendre appui contre la face extérieure F28.2 de la deuxième branche 28.2 de la chape 28.

Ce premier mode de réalisation nécessite que les deux côtés de la chape 28 soient accessibles pour pouvoir assembler le dispositif de liaison pivotante, l'axe cylindrique 32 étant introduit depuis un premier côté de la chape 28, la goupille fendue étant mise en place depuis un deuxième côté de la chape 28.

Selon un deuxième mode de réalisation décrit par les documents US-10.081.435 ou FR-2.947.592 et illustré par les figures 4 à 6, un dispositif de liaison pivotante comprend, en plus de la chape 28 et du bras 30, un système de liaison comportant :
- un corps tubulaire 42 qui présente, à une première extrémité, une collerette 42.1 configurée pour prendre appui contre la face extérieure F28.1 de la première branche 28.1 de la chape 28 et, à une deuxième extrémité, au moins une fente 42.2 permettant à la deuxième extrémité du corps tubulaire 42 de s'expanser radialement,
- un insert 44 de forme tronconique positionné à l'intérieur du corps tubulaire 42, au niveau de sa deuxième extrémité, présentant un alésage taraudé 44.1, et
- une vis 46, configurée pour se loger dans le corps tubulaire 42 et présentant, à une première extrémité, une tête 46.1 configurée pour être plaquée contre la collerette 42.1 du corps tubulaire 42 et, à une deuxième extrémité, un tronçon fileté 46.2 configuré pour se visser dans l'alésage taraudé 44.1.

Le vissage ou le dévissage de la vis 46 provoque le rapprochement ou l'écartement de l'insert 44 et de la tête 46.1 de la vis 46. Lorsque l'insert 44 et la tête 46.1 de la vis 46 sont à l'état écarté, la deuxième extrémité du corps tubulaire 42 n'est pas expansée radialement. Lorsque l'insert 44 et la tête 46.1 de la vis 46 sont à l'état rapproché, la deuxième extrémité du corps tubulaire 42 est expansée radialement.

Selon ce deuxième mode de réalisation, l'insert 44 et la tête 46.1 de la vis 46 étant à l'état écarté, le système de liaison est inséré dans les alésages des branches 28.1, 28.2 de la chape 28 et du bras 30 depuis un premier côté de la chape 28. Lorsque le système de liaison est inséré, la tête 46.1 de la vis 46 et l'insert 44 sont rapprochés en vissant la vis 46, depuis le premier côté de la chape 28, de manière à provoquer l'expansion de la deuxième extrémité du corps tubulaire 42.

Ainsi, selon ce deuxième mode de réalisation, la collerette 42.1 du corps tubulaire 42 forme une première butée permettant d'immobiliser le corps tubulaire 42 selon un premier sens. L'expansion de la deuxième extrémité du corps tubulaire forme une deuxième butée permettant d'immobiliser le corps tubulaire 42. Les frottements entre le corps tubulaire 42 et la deuxième branche 28.2 de la chape 28, en raison de l'expansion radiale de la deuxième extrémité du corps tubulaire, contribuent également à l'immobilisation du corps tubulaire 42 par rapport à la deuxième branche 28.2.

Ce deuxième mode de réalisation permet l'assemblage du dispositif de liaison pivotante depuis un seul côté de la chape 28.

Toutefois, il n'est pas pleinement satisfaisant car l'expansion de la deuxième extrémité du corps tubulaire 42 induit des contraintes dans la deuxième branche 28.2 de la chape 28.

La présente invention vise à remédier à tout ou partie des inconvénients de l'art antérieur.

A cet effet, l'invention a pour objet un dispositif de liaison pivotante reliant au moins deux pièces tel que revendiqué dans la revendication 1.

D'autres caractéristiques et avantages ressortiront de la description de l'invention qui va suivre, description donnée à titre d'exemple uniquement, en regard des dessins annexés parmi lesquels :
La figure 1 est une vue en perspective d'un aéronef,
La figure 2 est une vue en perspective d'un ensemble moteur d'un aéronef,
La figure 3 est une vue en perspective d'un dispositif de liaison pivotante qui illustre un premier mode de réalisation de l'art antérieur, à l'état démonté,

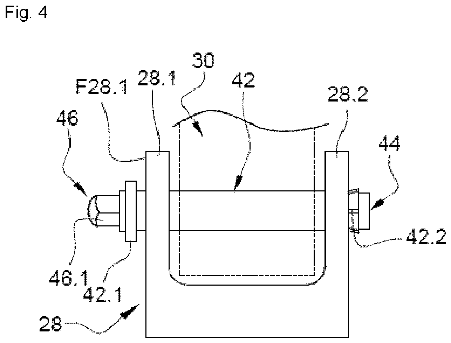

La figure 4 est une vue latérale d'un dispositif de liaison pivotante qui illustre un deuxième mode de réalisation de l'art antérieur,

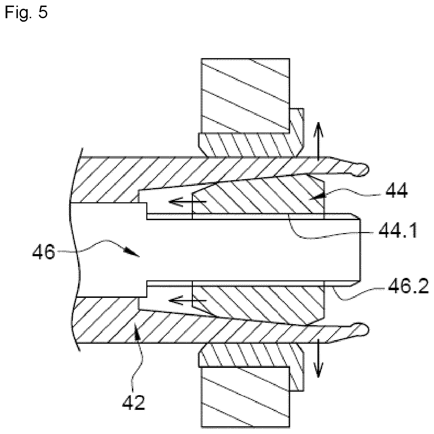

La figure 5 est une coupe longitudinale d'une partie du dispositif de liaison pivotante visible sur la figure 4,

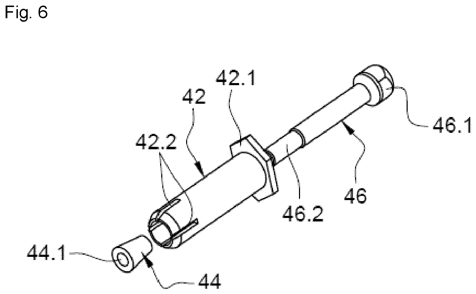

La figure 6 est une vue en perspective d'une partie du dispositif de liaison pivotante visible sur la figure 4, à l'état démonté,
La figure 7 est une coupe longitudinale d'un dispositif de liaison pivotante qui illustre un mode de réalisation de l'invention,

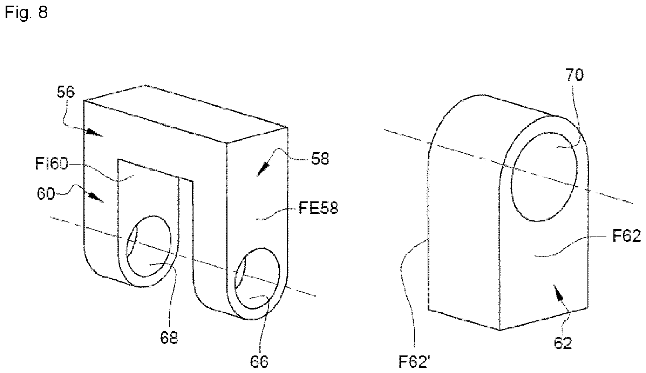

La figure 8 une vue en perspective d'une chape et d'un bras du dispositif de liaison pivotante visible sur la figure 7,
La figure 9 est une vue en perspective d'une bague de guidage du dispositif de liaison pivotante visible sur la figure 7,

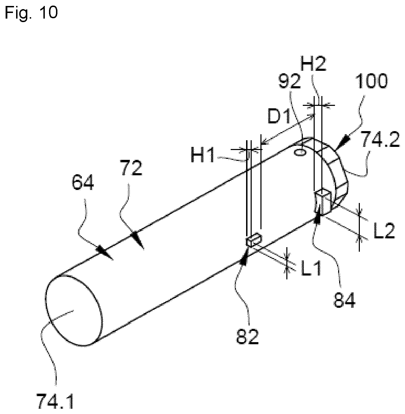

La figure 10 est une vue en perspective d'un axe cylindrique du dispositif de liaison pivotante visible sur la figure 7,
La figure 11 est une vue en perspective de la chape visible sur la figure 8 équipé de la bague de guidage visible sur la figure 9,
La figure 12 est une section transversale d'une rondelle emmanchée sur l'axe cylindrique visible sur la figure 10,
La figure 13 est une vue en perspective d'un axe cylindrique inséré dans une chape et un bras,
La figure 14 est une vue en perspective d'un axe cylindrique équipé d'une rondelle à l'issue de son insertion,
La figure 15 est une vue en perspective d'une partie d'un dispositif de liaison pivotante après un pivotement de l'axe cylindrique,
La figure 16 est une vue en perspective d'une partie d'un dispositif de liaison pivotante avant la mise en place d'une épingle, et
La figure 17 est une section d'un axe cylindrique d'un dispositif de liaison pivotante après la mise en plaque d'une épingle.

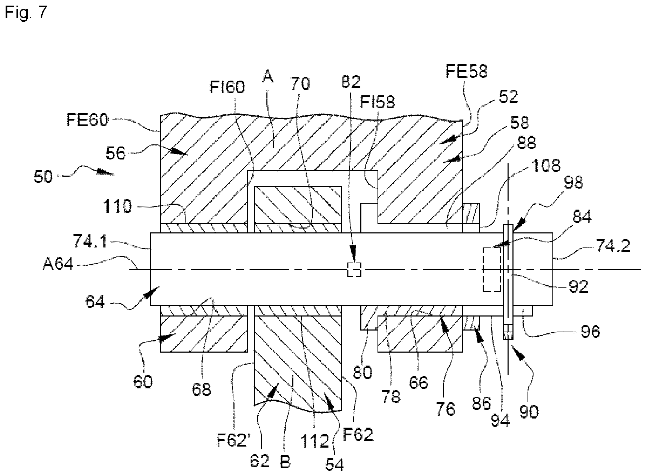

Sur la figure 7, on a représenté un dispositif de liaison pivotante 50 reliant au moins des première et deuxième parties 52 et 54. Selon une application, la première partie 52 est reliée à une première pièce A ou est une partie d'une première pièce A, comme par exemple un cadre d'une ouverture d'une nacelle d'un aéronef, et la deuxième partie 54 est reliée à une deuxième pièce B ou est une partie d'une deuxième pièce B, comme par exemple un capot. Selon une configuration, un capot est relié à un cadre d'une ouverture par au moins un dispositif de liaison pivotante 50 permettant au capot de pivoter par rapport au cadre de l'ouverture entre une position fermée dans laquelle il obture l'ouverture de la nacelle et une position d'ouverture dans laquelle il dégage l'ouverture de la nacelle.

Le dispositif de liaison pivotante 50 comprend :
- une chape 56, solidaire de la première pièce 52, présentant des première et deuxième branches 58, 60,
- un bras 62, solidaire du reste de la deuxième pièce 54, positionné entre les première et deuxième branches 58, 60 de la chape 56,
- un axe cylindrique 64, reliant le bras 62 et la chape 56, formant un axe de pivotement A64.

Pour la suite de la description, une direction longitudinale est une direction parallèle à l'axe de pivotement A64. Une direction radiale est perpendiculaire à l'axe de pivotement A64. Un plan longitudinal est un plan qui passe par l'axe de pivotement A64. Un plan transversal est un plan perpendiculaire à l'axe de pivotement A64.

Selon une configuration, chaque branche 58 (ou 60) comprend une face intérieure FI58 (ou FI60), orientée vers l'autre branche 60 (ou 58), et une face extérieure FE58 (ou FE60) opposée à la face intérieure FI58 (ou F60). Les faces intérieures FI58, FI60 et les faces extérieures FE58, FE60 sont parallèles entre elles et positionnées dans des plans transversaux.

Chaque branche 58 (ou 60) comprend un orifice 66 (ou 68) qui débouche au niveau de la face intérieure FI58 (ou FI60) et de la face extérieure FE58 (ou FE60). Selon une configuration, chaque orifice 66, 68 est cylindrique et présente un axe de révolution perpendiculaire à la face intérieure FI58 (ou FI60) et à la face extérieure FE58 (ou FE60).

Le bras 62 comprend deux faces latérales F62, F62', parallèles entre elles et perpendiculaires à l'axe de pivotement A64, ainsi qu'un orifice 70 qui débouche au niveau des faces latérales F62, F62'. Selon une configuration, l'orifice 70 est cylindrique et présente un axe de révolution, perpendiculaire aux faces latérales F62, F62', qui correspond à l'axe de pivotement A64.

L'axe cylindrique 64 présente une surface périphérique 72 cylindrique, coaxiale à l'axe de pivotement A64, qui s'étend entre des première et deuxième faces terminales 74.1, 74.2 sensiblement perpendiculaires à l'axe de pivotement A64.

L'orifice 66 de la première branche 58 a un diamètre supérieur au diamètre de l'axe cylindrique 64.

Le dispositif de liaison pivotante 50 comprend une bague de guidage 76, positionnée dans l'orifice 66, qui présente un corps tubulaire 78 ayant un diamètre extérieur sensiblement égal à celui de l'orifice 66 de la première branche 58 et un diamètre intérieur sensiblement égal au diamètre de l'axe cylindrique 64 et qui s'étend entre des première et deuxième extrémités 78.1, 78.2 ainsi qu'une collerette 80, reliée à la première extrémité 78.1 du corps tubulaire 78, positionnée, en fonctionnement, en regard de la face intérieure FI58 de la première branche 58 et configurée pour y prendre appui.

Le corps tubulaire 78 a une longueur (dimension prise entre ses première et deuxième extrémités 78.1 78.2) sensiblement égale à la distance séparant les faces intérieure et extérieure FI58, FE58 de la première branche 58 de la chape 56.

L'axe cylindrique 64 comprend une première butée 82, présentant une première section dans un plan transversal, en U inversé par exemple, ayant une première hauteur H1 (dimension prise selon une direction radiale) et une première largeur L1 (dimension prise selon une direction perpendiculaire à la direction radiale). Cette première butée 82 est configurée pour coopérer en fonctionnement avec la collerette 80 de la bague de guidage 76 et empêcher une translation de l'axe cylindrique 64 selon la direction longitudinale dans un premier sens.

L'axe cylindrique 64 comprend également une deuxième butée 84, présentant une deuxième section dans un plan transversal, en U inversé par exemple, supérieure à celle de la première butée 82, ayant une deuxième hauteur H2 supérieure à la première hauteur H1 de la première butée 82 et/ou une deuxième largeur L2 supérieure à la première largeur L1 de la première butée 82. Cette deuxième butée 84 est configurée pour coopérer en fonctionnement avec la face extérieure FE58 de la première branche 58 et empêcher une translation de l'axe cylindrique 64 selon la direction longitudinale dans un deuxième sens opposé au premier sens. La deuxième butée 84 peut être en appui contre la face extérieure FE58 de la première branche 58 directement ou par l'intermédiaire d'une rondelle 86.

Selon une configuration, les première et deuxième butées 82, 84 sont positionnées approximativement sur la même génératrice de l'axe cylindrique 64.

Les première et deuxième butées 82, 84 sont séparées d'une distance D1 sensiblement égale à la longueur L76 de la bague de guidage 76, correspondant à l'épaisseur de la collerette 80 et à la longueur du corps tubulaire 78 (dimension prise selon la direction longitudinale) augmentée de l'épaisseur de la rondelle 86 si cette dernière est présente.

Pour permettre le montage de l'axe cylindrique 64, la bague de guidage 76 comprend une première fente longitudinale 88, qui s'étend sur toute sa longueur, configurée pour permettre le passage de la première butée 82. Selon une configuration, la première fente longitudinale 88 a une largeur sensiblement égale ou très légèrement supérieure à la première largeur L1 de la première butée 82. Selon une autre configuration convenant si la hauteur H1 de la première butée 82 est inférieure à l'épaisseur du corps tubulaire 78 de la bague de guidage 76, la première fente longitudinale 88 pourrait être remplacée par une première gorge longitudinale, débouchant sur la surface intérieure de la bague de guidage 76, configurée pour permettre le passage de la première butée 82.

Le dispositif de liaison pivotante 50 comprend un système d'immobilisation 90 configuré pour immobiliser en rotation l'axe cylindrique 64 par rapport à la bague de guidage 76 dans une position dans laquelle la première butée 82 est décalée par rapport à la première fente longitudinale 88 en fonctionnement.

Selon un mode de réalisation, le système d'immobilisation 90 comprend un trou 92 traversant l'axe cylindrique 64, un prolongement 94, solidaire de la bague de guidage 76, positionné au niveau de la deuxième extrémité 78.2 du corps tubulaire 78, une deuxième fente longitudinale 96 prévue au niveau du prolongement 94 de la bague de guidage 76 et une goupille 98 configurée pour traverser la deuxième fente longitudinale 96 et se loger dans le trou 92. Lorsque l'axe cylindrique 64 est correctement positionné, le prolongement 94 est en saillie par rapport à la face extérieure FE58 de la première branche 58. Selon une configuration, la première fente longitudinale 88 et le prolongement 94 sont diamétralement opposés.

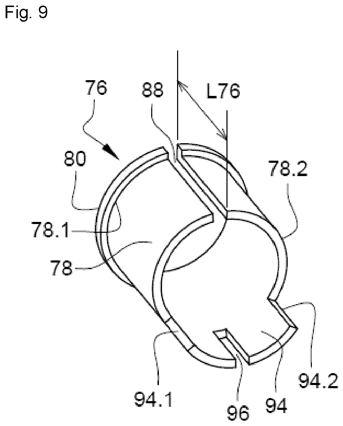

Selon un mode de réalisation visible sur la figure 9, le prolongement 94 présente un rayon intérieur égal au diamètre intérieur du corps tubulaire 78 et un rayon extérieur égal au diamètre extérieur du corps tubulaire 78. Le prolongement 94 est délimité par des premier et deuxième chants 94.1, 94.2 positionnés dans des plans longitudinaux. Selon une configuration, le prolongement 94 s'étend sur un secteur angulaire de l'ordre de 90° (angle formé entre les premier et deuxième chants 94.1,94.2).

Bien entendu, l'invention n'est pas limitée à cet angle ou à cette forme pour le prolongement 94. De même, la deuxième fente longitudinale 96 pourrait être remplacée par un orifice ou une lumière orientée selon la direction longitudinale.

Le trou 92 a une section sensiblement identique ou très légèrement supérieure à celle de la goupille 98. Ce trou 92 s'étend selon un diamètre de l'axe cylindrique 64. La deuxième fente longitudinale 96 a une largeur sensiblement identique ou très légèrement supérieure à la section de la goupille 98. Le trou 92 et la deuxième fente longitudinale 96 sont positionnés pour que la première butée 82 soit décalée par rapport à la première fente longitudinale 88 lorsque l'axe cylindrique 64 est immobilisé en rotation par rapport à la bague de guidage 76 grâce à la goupille 98.

Selon une configuration, les première et deuxième fentes longitudinales 88, 96 sont diamétralement opposées et les orifices débouchants du trou 92 sont décalés angulairement par rapport à la première butée 82, d'un angle d'environ 90° par exemple.

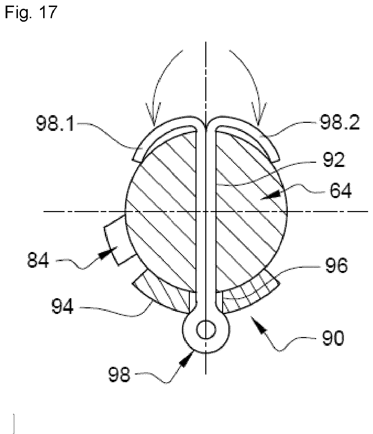

Selon un mode de réalisation, la goupille 98 est une goupille fendue. Selon une configuration, elle est introduite via la deuxième fente longitudinale 96 et présente deux branches 98.1, 98.2 dont les extrémités sont recourbées, comme illustré sur la figure 17, de manière en empêcher le retrait de la goupille 98 du trou 92.

Lorsque l'axe cylindrique 64 est immobilisé en rotation par rapport à la bague de guidage 76 de manière à ce que la première butée 82 soit décalée par rapport à la première fente 88 de la bague de guidage 76, l'axe cylindrique 64 est immobilisé en translation par rapport à la première branche 58, la première butée 82 prenant appui contre la collerette 80 de la bague de guidage 76 elle-même en appui contre la face intérieure FI58 de la première branche 58, la deuxième butée 84 prenant appui directement contre la face extérieure FE58 de la première branche 58 ou prenant appui contre la rondelle 86 elle-même en appui contre la face extérieure FE58 de la première branche 58.

Les première et deuxième butées 82, 84 sont positionnées de telle sorte que la première face terminale 74.1 de l'axe cylindrique 64 soit positionnée dans le plan de la face extérieure FE60 de la deuxième branche 60 de la chape 56 ou très légèrement en saillie.

L'axe cylindrique 64 comprend au moins une forme 100 configurée pour l'entraîner en rotation. Selon un mode de réalisation, la surface périphérique 72 de l'axe cylindrique 64 comprend un tronçon terminal 102 adjacent à la deuxième face terminale 74.2, qui a une section non cylindrique, par exemple carrée, hexagonale, octogonale ou autres.

Selon un mode de réalisation, le dispositif de liaison pivotante 50 comprend une rondelle 86 qui présente un orifice 104 pour permettre le passage de l'axe cylindrique 64 et du prolongement 94, ladite rondelle 86 étant configurée pour être intercalée entre la deuxième butée 84 et la face extérieure FE58 de la première branche 58. Cette rondelle 86 assure une meilleure répartition des contraintes sur toute la périphérie de l'orifice 66 de la première branche 58.

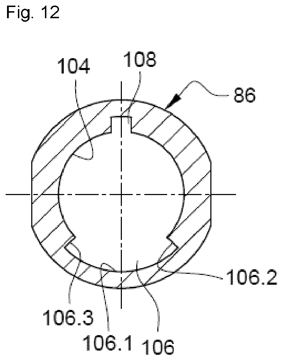

Selon une configuration illustrée par la figure 12, l'orifice 104 a un diamètre sensiblement égal à celui de l'axe cylindrique 64. La rondelle 86 comprend une découpe 106 configurée pour permettre le passage du prolongement 94. La découpe 106 et le prolongement 94 ont des formes qui coopèrent de manière à immobiliser en rotation la rondelle 86 par rapport à la bague de guidage 76. Selon une configuration, la découpe 106 comprend un premier bord 106.1 en arc de cercle qui présente un rayon égal au rayon extérieur du prolongement 94, des deuxième et troisième bords 106.2, 106.3 reliant le premier bord 106.1 et l'orifice 104 et configurés pour coopérer avec les premier et deuxième chants 94.1, 94.2 du prolongement 94. Les deuxième et troisième bords 106.2, 106.3 forment un angle sensiblement égal à celui des premier et deuxième chants 94.1, 94.2 du prolongement 94. En fonctionnement, le prolongement 94 est inséré dans la découpe 106 et la rondelle 86 est immobilisée en rotation par rapport à la bague de guidage 76.

La rondelle 86 comprend une encoche 108 configurée pour permettre le passage de la première butée 82 et pour bloquer le passage de la deuxième butée 84. Selon une configuration, l'encoche 108 a une section sensiblement identique ou très légèrement supérieure à celle de la première butée 82 et inférieure à celle de la deuxième butée 84. L'encoche 108 est diamétralement opposée à la découpe 106.

Selon les cas, l'orifice 68 de la deuxième branche 60 de la chape 56 peut avoir un diamètre égal à celui de l'axe cylindrique 64 ou supérieur de manière à intercaler une deuxième bague de guidage 110 entre l'axe cylindrique 64 et la deuxième branche 60.

L'orifice 70 du bras 62 peut avoir un diamètre égal à celui de l'axe cylindrique 64 ou supérieur de manière à intercaler une troisième bague de guidage 112 entre l'axe cylindrique 64 et le bras 62.

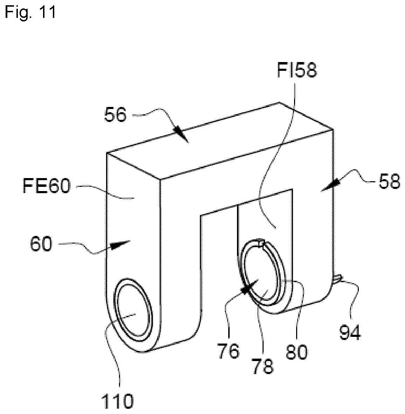

Le montage du dispositif de liaison pivotante 50 est décrit au regard des figures 11 à 17.

La bague de guidage 76 est insérée dans l'orifice 66 de la première branche 58 de la chape 56, comme illustré sur la figure 11. Les éventuelles autres bagues de guidage 110, 112 sont insérées dans l'orifice 68 de la deuxième branche 60 de la chape et l'orifice 70 du bras 62.

Comme illustré sur la figure 12, la rondelle 86 est emmanchée sur l'axe cylindrique 64 depuis la première face terminale 74.1 jusqu'à venir en contact avec la deuxième butée 84, la première butée 82 ayant traversé l'encoche 108 de la rondelle 86.

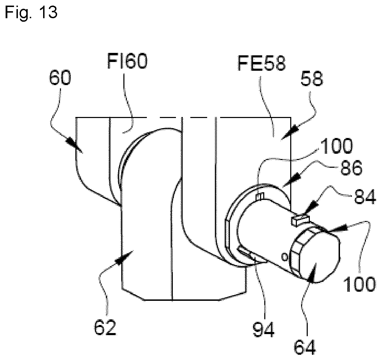

L'axe cylindrique 64 est introduit dans la bague de guidage 76 positionnée dans l'orifice 66 de la première branche 58 de la chape 56, puis traverse le bras 62 et enfin la deuxième branche 60 de la chape 56, comme illustré sur la figure 13. Lors de la mise en place de l'axe cylindrique 64, la première butée 82 passe à travers la première fente longitudinale 88.

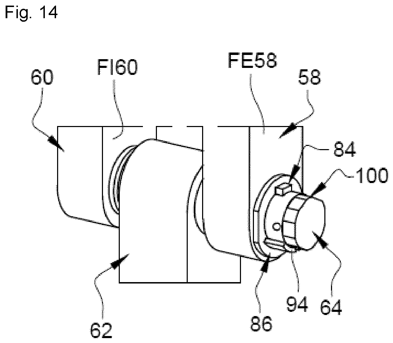

Comme illustré sur la figure 14, l'axe cylindrique 64 est inséré jusqu'à ce que la deuxième butée 84 prenne appui contre la rondelle 86 qui est elle-même en butée contre la deuxième extrémité 78.2 du corps tubulaire 78 de la bague de guidage 76 et contre la face extérieure FE58 de la première branche 58. Dès lors, la première butée 82 est positionnée entre la collerette 80 de la bague de guidage 76 et le bras 62.

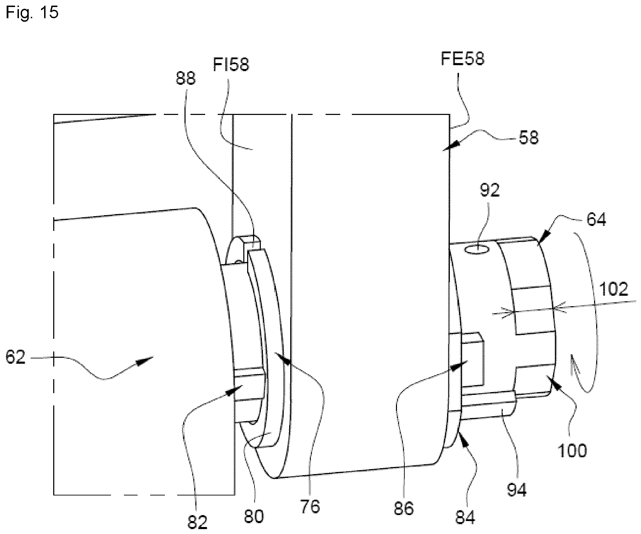

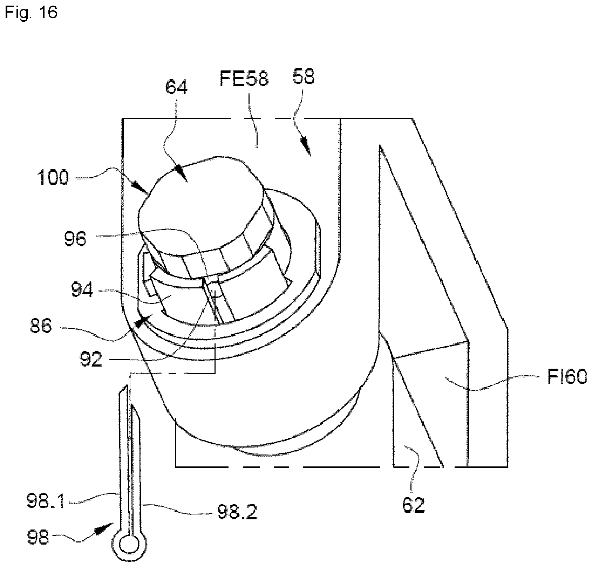

L'axe cylindrique 64 est alors pivoté, comme illustré sur la figure 15, de manière à décaler la première butée 82 par rapport à la première fente longitudinale 88 jusqu'à ce que le trou 92 de l'axe cylindrique 64 soit aligné avec la deuxième fente longitudinale 96 de la bague de guidage 76, comme illustré sur la figure 16.

La goupille 98 est alors insérée dans le trou 92 en traversant la deuxième fente longitudinale 96 et les extrémités de ses branches 98.1, 98.2 sont alors recourbées, comme illustré sur la figure 17.

Le dispositif de liaison pivotante 50 peut être monté depuis un seul côté de la chape 56. Par ailleurs, il n'induit aucune contrainte radiale dans les première et deuxième branches de la chape 56.

## Revendications

1. Dispositif de liaison pivotante reliant au moins deux pièces (52, 54) et comprenant :
- une chape (56), solidaire de la première pièce (52), présentant des première et deuxième branches (58, 60) comportant chacune une face intérieure (FI58, FI60) et une face extérieure (FE58, FE60), ainsi qu'un orifice (66, 68) débouchant au niveau des faces intérieure et extérieure (FI58, FI60, FE58, FE60),
- un bras (62), solidaire de la deuxième pièce (54), positionné entre les première et deuxième branches (58, 60) de la chape (56) et comportant un orifice (70),
- un axe cylindrique (64), configuré pour se loger dans les orifices (66, 68, 70) des première et deuxième branches (58, 60) et du bras (62), formant un axe de pivotement (A64) et présentant une surface périphérique (72) ainsi que des première et deuxième faces terminales (74.1, 74.2),
- une bague de guidage (76), positionnée dans l'orifice (66) de la première branche (58), ladite bague de guidage (76) présentant un corps tubulaire (78), s'étendant entre des première et deuxième extrémités (78.1, 78.2) et ayant un diamètre extérieur sensiblement égal à celui de l'orifice (66) de la première branche (58) et un diamètre intérieur sensiblement égal au diamètre de l'axe cylindrique (64),
- une collerette (80), reliée à la première extrémité (78.1) du corps tubulaire (78), **caractérisé en ce que** la collerette (80) est en appui contre la face intérieure (FI58) de la première branche (58) en fonctionnement, et **en ce que** l'axe cylindrique (64) comprend une première butée (82), configurée pour coopérer en fonctionnement avec la collerette (80) de la bague de guidage (76) et empêcher une translation de l'axe cylindrique (64) selon une direction longitudinale dans un premier sens ainsi qu'une deuxième butée (84) configurée pour coopérer en fonctionnement avec la face extérieure (FE58) de la première branche (58) et empêcher une translation de l'axe cylindrique (64) selon la direction longitudinale dans un deuxième sens opposé au premier sens, la bague de guidage (76) comprenant une première fente ou gorge longitudinale (88) configurée pour permettre le passage de la première butée (82) et **en ce que** le dispositif de liaison pivotante comprend un système d'immobilisation (90) configuré pour immobiliser en rotation l'axe cylindrique (64) par rapport à la bague de guidage (76) dans une position dans laquelle la première butée (82) est décalée par rapport à la première fente longitudinale (88).

2. Dispositif de liaison pivotante selon la revendication 1, **caractérisé en ce qu'**il comprend une rondelle (86) emmanchée sur l'axe cylindrique (64) et intercalée entre la deuxième butée (84) et la face extérieure (FE58) de la première branche (58).

3. Dispositif de liaison selon la revendication précédente, **caractérisé en ce que** la rondelle (86) comprend un orifice (104) qui présente un diamètre sensiblement égal au diamètre de l'axe cylindrique (64) et une encoche (108) configurée pour permettre le passage de la première butée (82).

4. Dispositif de liaison pivotante selon l'une des revendications précédentes, **caractérisé en ce que** le corps tubulaire (78) a une longueur sensiblement égale à la distance séparant les faces intérieure et extérieure (FI58, FE58) de la première branche (58).

5. Dispositif de liaison pivotante selon l'une des revendications précédentes, **caractérisé en ce que** le système d'immobilisation (90) comprend un trou (92) traversant l'axe cylindrique (64), un prolongement (94), solidaire de la bague de guidage (76) et positionné au niveau de la deuxième extrémité (78.2) du corps tubulaire (78), une deuxième fente longitudinale (96) prévue au niveau du prolongement (94) de la bague de guidage (76) ainsi qu'une goupille (98) configurée pour traverser la deuxième fente longitudinale (96) et se loger dans le trou (92).

6. Dispositif de liaison pivotante selon la revendication précédente, **caractérisé en ce qu'**il comprend une rondelle (86) emmanchée sur l'axe cylindrique (64), intercalée entre la deuxième butée (84) et la face extérieure (FE58) de la première branche (58), ladite rondelle (86) comportant un orifice (104) qui présente un diamètre sensiblement égal au diamètre de l'axe cylindrique (64) et une découpe (106) configurée pour permettre le passage du prolongement (94).

7. Dispositif de liaison pivotante selon la revendication précédente, **caractérisé en ce que** la découpe (106) et le prolongement (94) ont des formes qui coopèrent de manière à immobiliser en rotation la rondelle (86) par rapport à la bague de guidage (76).

8. Dispositif de liaison pivotante selon l'une des revendications précédentes, **caractérisé en ce que** les première et deuxième butées (82, 84) sont positionnées approximativement sur une même génératrice de l'axe cylindrique (64), la deuxième butée (84) présentant une deuxième section dans un plan transversal supérieure à une première section dans un plan transversal de la première butée (82).

9. Dispositif de liaison pivotante selon l'une des revendications précédentes, **caractérisé en ce que** l'axe cylindrique (64) comprend au moins une forme (100) configurée pour l'entraîner en rotation.

10. Aéronef comprenant un capot relié à un cadre d'une ouverture par au moins un dispositif de liaison pivotante selon l'une des revendications précédentes.

## Patentansprüche

1. Vorrichtung zur schwenkbaren Verbindung, welche mindestens zwei Teile (52, 54) verbindet und umfasst:
- ein mit dem ersten Teil (52) fest verbundenes Gabelstück (56), das einen ersten und einen zweiten Schenkel (58, 60) aufweist, die jeweils eine Innenseite (FI58, FI60) und eine Außenseite (FE58, FE60) sowie eine Öffnung (66, 68), die an der Innen- und der Außenseite (FI58, FI60, FE58, FE60) mündet, aufweisen,
- einen mit dem zweiten Teil (54) fest verbundenen Arm (62), der zwischen dem ersten und dem zweiten Schenkel (58, 60) des Gabelstücks (56) positioniert ist und eine Öffnung (70) aufweist,
- einen zylindrischen Bolzen (64), der dafür ausgelegt ist, in den Öffnungen (66, 68, 70) des ersten und des zweiten Schenkels (58, 60) und des Armes (62) aufgenommen zu werden, eine Schwenkachse (A64) bildet und eine Umfangsfläche (72) sowie eine erste und eine zweite Endfläche (74.1, 74.2) aufweist,
- eine Führungshülse (76), die in der Öffnung (66) des ersten Schenkels (58) positioniert ist, wobei die Führungshülse (76) einen rohrförmigen Körper (78) aufweist, der sich zwischen einem ersten und einem zweiten Ende (78.1, 78.2) erstreckt und einen Außendurchmesser, der im Wesentlichen gleich dem Durchmesser der Öffnung (66) des ersten Schenkels (58) ist, und einen Innendurchmesser, der im Wesentlichen gleich dem Durchmesser des zylindrischen Bolzens (64) ist, aufweist,
- einen Kragenring (80), der mit dem ersten Ende (78.1) des rohrförmigen Körpers (78) verbunden ist,
**dadurch gekennzeichnet, dass** der Kragenring (80) im Betrieb an der Innenseite (FI58) des ersten Schenkels (58) anliegt, und dadurch, dass der zylindrische Bolzen (64) einen ersten Anschlag (82), der dafür ausgelegt ist, im Betrieb mit dem Kragenring (80) der Führungshülse (76) zusammenzuwirken und eine Translation des zylindrischen Bolzens (64) entlang einer Längsrichtung in einer ersten Richtung zu verhindern, sowie einen zweiten Anschlag (84), der dafür ausgelegt ist, im Betrieb mit der Außenseite (FE58) des ersten Schenkels (58) zusammenzuwirken und eine Translation des zylindrischen Bolzens (64) entlang der Längsrichtung in einer zur ersten Richtung entgegengesetzten zweiten Richtung zu verhindern, umfasst, wobei die Führungshülse (76) einen ersten Längsschlitz oder eine erste Längsnut (88) umfasst, der bzw. die dafür ausgelegt ist, den Durchgang des ersten Anschlags (82) zu ermöglichen, und dadurch, dass die Vorrichtung zur schwenkbaren Verbindung ein Blockiersystem (90) umfasst, das dafür ausgelegt ist, den zylindrischen Bolzen (64) gegen Drehung in Bezug auf die Führungshülse (76) in einer Position zu blockieren, in welcher der erste Anschlag (82) in Bezug auf den ersten Längsschlitz (88) versetzt ist.

2. Vorrichtung zur schwenkbaren Verbindung nach Anspruch 1, **dadurch gekennzeichnet, dass** sie eine Scheibe (86) umfasst, die auf den zylindrischen Bolzen (64) aufgeschoben und zwischen dem zweiten Anschlag (84) und der Außenseite (FE58) des ersten Schenkels (58) eingefügt ist.

3. Verbindungsvorrichtung nach dem vorhergehenden Anspruch, **dadurch gekennzeichnet, dass** die Scheibe (86) eine Öffnung (104), welche einen Durchmesser aufweist, der im Wesentlichen gleich dem Durchmesser des zylindrischen Bolzens (64) ist, und einen Einschnitt (108), der dafür ausgelegt ist, den Durchgang des ersten Anschlags (82) zu ermöglichen, umfasst.

4. Vorrichtung zur schwenkbaren Verbindung nach einem der vorhergehenden Ansprüche, **dadurch gekennzeichnet, dass** der rohrförmige Körper (78) eine Länge aufweist, der im Wesentlichen gleich dem Abstand ist, der die Innenseite und die Außenseite (FI58, FE58) des ersten Schenkels (58) trennt.

5. Vorrichtung zur schwenkbaren Verbindung nach einem der vorhergehenden Ansprüche, **dadurch gekennzeichnet, dass** das Blockiersystem (90) ein Loch (92), das den zylindrischen Bolzen (64) durchquert, eine Verlängerung (94), die mit der Führungshülse (76) fest verbunden ist und am zweiten Ende (78.2) des rohrförmigen Körpers (78) positioniert ist, einen zweiten Längsschlitz (96), der an der Verlängerung (94) der Führungshülse (76) vorgesehen ist, sowie einen Splint (98), der dafür ausgelegt ist, den zweiten Längsschlitz (96) zu durchqueren und in dem Loch (92) aufgenommen zu werden, umfasst.

6. Vorrichtung zur schwenkbaren Verbindung nach dem vorhergehenden Anspruch, **dadurch gekennzeichnet, dass** sie eine Scheibe (86) umfasst, die auf den zylindrischen Bolzen (64) aufgeschoben und zwischen dem zweiten Anschlag (84) und der Außenseite (FE58) des ersten Schenkels (58) eingefügt ist, wobei die Scheibe (86) eine Öffnung (104) umfasst, welche einen Durchmesser, der im Wesentlichen gleich dem Durchmesser des zylindrischen Bolzens (64) ist, und einen Ausschnitt (106), der dafür ausgelegt ist, den Durchgang der Verlängerung (94) zu ermöglichen, aufweist.

7. Vorrichtung zur schwenkbaren Verbindung nach dem vorhergehenden Anspruch, **dadurch gekennzeichnet, dass** der Ausschnitt (106) und die Verlängerung (94) Formen aufweisen, welche derart zusammenwirken, dass die Scheibe (86) gegen Drehung in Bezug auf die Führungshülse (76) blockiert wird.

8. Vorrichtung zur schwenkbaren Verbindung nach einem der vorhergehenden Ansprüche, **dadurch gekennzeichnet, dass** der erste und der zweite Anschlag (82, 84) annähernd auf ein und derselben Erzeugenden des zylindrischen Bolzens (64) positioniert sind, wobei der zweite Anschlag (84) einen zweiten Querschnitt in einer Querebene aufweist, der größer als ein erster Querschnitt des ersten Anschlags (82) in einer Querebene ist.

9. Vorrichtung zur schwenkbaren Verbindung nach einem der vorhergehenden Ansprüche, **dadurch gekennzeichnet, dass** der zylindrische Bolzen (64) wenigstens eine Form (100) umfasst, die dafür ausgelegt ist, ihn drehend mitzunehmen.

10. Luftfahrzeug, welches eine Abdeckung umfasst, die mit einem Rahmen einer Öffnung durch mindestens eine Vorrichtung zur schwenkbaren Verbindung nach einem der vorhergehenden Ansprüche verbunden ist.

## Claims

1. Pivoting connection device connecting at least two components (52, 54) and comprising:
- a clevis (56), rigidly attached to the first component (52), having first and second branches (58, 60), each one comprising an interior face (FI58, FI60) and an exterior face (FE58, FE60), as well as an orifice (66, 68) opening onto the interior and exterior faces (FI58, FI60, FE58, FE60),
- an arm (62), rigidly secured to the second component (54), positioned between the first and second branches (58, 60) of the clevis (56) and comprising an orifice (70),
- a cylindrical shaft (64), configured to be housed in the orifices (66, 68, 70) of the first and second branches (58, 60) and of the arm (62), forming a pivot axis (A64) and having a peripheral surface (72) and first and second end faces (74.1, 74.2),
- a guide ring (76), positioned in the orifice (66) of the first branch (58), said guide ring (76) having a tubular body (78) extending between first and second ends (78.1, 78.2) and having an outside diameter substantially equal to that of the orifice (66) of the first branch (58) and an inside diameter substantially equal to the diameter of the cylindrical shaft (64),
- a flange (80), connected to the first end (78.1) of the tubular body (78),
**characterized in that** the flange (80) presses against the interior face (FI58) of the first branch (58) in operation, and **in that** the cylindrical shaft (64) comprises a first end stop (82), which is configured to collaborate in operation with the flange (80) of the guide ring (76) and prevent translational movement of the cylindrical shaft (64) in a longitudinal direction in a first sense of that direction and a second end stop (84) configured to collaborate in operation with the exterior face (FE58) of the first branch (58) and prevent translational movement of the cylindrical shaft (64) in the longitudinal direction in a second sense of the direction that is the opposite to the first sense, the guide ring (76) comprising a first longitudinal groove or slot (88) configured to allow the first end stop (82) to pass, and **in that** the pivoting connection device comprises an immobilizing system (90) configured to immobilize the cylindrical shaft (64) in terms of rotation with respect to the guide ring (76) in a position in which the first end stop (82) is offset from the first longitudinal slot (88).

2. Pivoting connection device according to Claim 1, **characterized in that** it comprises a washer (86) pushed onto the cylindrical shaft (64) and interposed between the second end stop (84) and the exterior face (FE58) of the first branch (58).

3. Connection device according to the preceding claim, **characterized in that** the washer (86) has an orifice (104) that has a diameter substantially equal to the diameter of the cylindrical shaft (64) and a notch (108) configured to allow the first end stop (82) to pass.

4. Pivoting connection device according to one of the preceding claims, **characterized in that** the tubular body (78) has a length substantially equal to the distance separating the interior and exterior faces (FI58, FE58) of the first branch (58).

5. Pivoting connection device according to one of the preceding claims, **characterized in that** the immobilizing system (90) comprises a hole (92) passing through the cylindrical shaft (64), an extension (94) secured to the guide ring (76) and positioned at the level of the second end (78.2) of the tubular body (78), a second longitudinal slot (96) provided at the extension (94) of the guide ring (76), and a pin (98) configured to pass through the second longitudinal slot (96) and become lodged in the hole (92).

6. Pivoting connection device according to the preceding claim, **characterized in that** it comprises a washer (86) pushed onto the cylindrical shaft (64) and interposed between the second end stop (84) and the exterior face (FE58) of the first branch (58), said washer (86) comprising an orifice (104) which exhibits a diameter substantially equal to the diameter of the cylindrical shaft (64) and a cutout (106) configured to allow the extension (94) to pass.

7. Pivoting connection device according to the preceding claim, **characterized in that** the cutout (106) and the extension (94) have shapes that collaborate in such a way as to immobilize the washer (86) with respect to the guide ring (76) in terms of rotation.

8. Pivoting connection device according to one of the preceding claims, **characterized in that** the first and second end stops (82, 84) are positioned approximately on the one same generatrix of the cylindrical shaft (64), the second end stop (84) having a second cross section in a transverse plane which is greater than a first cross section in a transverse plane of the first end stop (82).

9. Pivoting connection device according to one of the preceding claims, **characterized in that** the cylindrical shaft (64) comprises at least one shape (100) configured so that it can be rotationally driven.

10. Aircraft comprising a cowl connected to a frame of an opening by at least one pivoting connection device according to one of the preceding claims.
